# EUROPÄISCHE PATENTSCHRIFT

(11) **EP 4 077 018 B1**
(45) Veröffentlichungstag und Bekanntmachung des Hinweises auf die Patenterteilung: **02.10.2024**
(21) Anmeldenummer: 19836803.7
(22) Anmeldetag: 20.12.2019
(51) Int. Cl.: B60L 1/02, B60L 1/00, B60L 58/26, B60K 1/00, B60L 50/60, H01M 50/20, B60K 11/02, B60H 1/00, B60K 1/04, B60L 50/64, H01M 10/66, H01M 10/613, H01M 10/625

(54) **KOMPRESSOR- SOWIE BATTERIE-SYSTEM FÜR EIN KRAFTFAHRZEUG**
COMPRESSOR AND BATTERY SYSTEM FOR A VEHICLE
SYSTÈME DE COMPRESSEUR ET DE BATTERIE POUR UN VÉHICULE

(43) Veröffentlichungstag der Anmeldung: 26.10.2022
(73) Patentinhaber: IPETRONIK GmbH & Co. KG, 76532 Baden-Baden (DE)
(72) Erfinder: ZIPP, Walter, 76543 Baden-Baden (DE)
(74) Vertreter: Meissner Bolte Partnerschaft mbB
(86) Internationale Anmeldenummer: PCT/EP2019/086625
(87) Internationale Veröffentlichungsnummer: WO 2021/121621

(56) Entgegenhaltungen:
- DE-A1- 102009 054 186
- DE-A1- 102016 108 468
- DE-A1- 102016 108 468
- US-A1- 2012 003 515
- US-A1- 2012 003 515
- US-A1- 2012 222 438
- US-A1- 2012 222 438
- US-A1- 2018 086 224
- US-A1- 2018 086 224

## Beschreibung

Die Erfindung betrifft ein Kompressor-System bzw. ein Batterie-System für ein Kraftfahrzeug, insbesondere mit elektrischem, vorzugsweise rein elektrischem, Antrieb, sowie eine Verwendung eines entsprechenden Systems, ein Kraftfahrzeug mit einem entsprechenden System, ein Verfahren zur Herstellung eines Kraftfahrzeuges sowie ein Verfahren zum Betreiben eines entsprechenden Systems bzw. Kraftfahrzeuges.

Insbesondere bei Fahrzeugen mit rein elektrischem Antrieb (rein elektrischem Triebstrang) ohne Verbrennungsmotor (insbesondere kein Hybrid bzw. ohne Range-Extender) werden vergleichsweise große elektrische Akkumulatoren (im Folgenden auch aufladbare Batterien bzw. nur kurz: Batterien) benötigt, um die Energie für den Antrieb bereitzustellen. Vor allem bei der schnellen Aufladung der Batterie, insbesondere in einem Leistungsbereich oberhalb von 150 kW, können hohe Stromstärken auftreten, die eine entsprechende Wärme erzeugen.

Die Abwärme einer elektrischen Zuleitung einer Ladestation wird üblicherweise über eine interne Wasserkühlung in einem Stromkabel (zumindest teilweise) abgeführt. Hierbei handelt es sich um einen Ladestation-seitigen Kühlkreislauf. Eine Abwärme im Fahrzeug (nach einem elektrischen Kontakt bzw. nach einer elektrischen Kontaktklemme) wird von der Ladestation-Kühlung nicht abgeführt, sondern muss ggf. durch eine fahrzeuginterne Kühlanlage gekühlt werden.

Dies erfordert vergleichsweise hohe Kälteleistungen und kann (insbesondere im Ladebetrieb) zu erheblichen Vibrationen und Geräuschen in der Fahrzeugkabine bzw. der Fahrzeugumgebung führen. Übliche, insbesondere im vorderen Karosseriebereich verbaute Klimakompressoren, sind diesbezüglich besonders problematisch.

In US 2017/0096073 A1 wird eine alternative Kühlmethode zum Kompensieren der (fahrzeuginternen) Abwärme beim Schnellladen der Batterie beschrieben. Dabei wird Wasser an den Unterboden des Fahrzeugs gespritzt, so dass die Abwärme der Batterie (bzw. des Batterie-Pakets) am Fahrzeugunterboden weggeführt werden kann, ohne fahrzeugintern eine Kälteleistung bereitstellen zu müssen. Dadurch lassen sich Störgeräusche und Vibrationen durch den Betrieb des Fahrzeugkältekreises vermeiden. Diese in US 2017/0096073 A1 vorgeschlagene Kühlmethode ist vergleichsweise aufwändig und nur eingeschränkt nutzbar. Weiterhin wird in US 2017/0096073 A1 erwähnt, dass zur Kühlung eines Batterie-Paketes eine Kühlschleife ("coolant loop") zwischen den Batterie-Zellen realisiert sein kann. DE 10 2016 108468 A1 offenbart ein elektrisches Kompressor-System für ein Kraftfahrzeug, mit elektrischem Antrieb, umfassend einen elektrisch angetriebenen Kompressor zum Komprimieren eines Kältemittels sowie mindestens eine Kompressor-Kühleinrichtung zur Kühlung des Kompressors, wobei in der Kompressor-Kühleinrichtung ein Kühlfluid strömbar ist.
DE 10 2009 054186 A1 offenbart ein Kraftfahrzeug, mit elektrischem Antrieb, umfassend System zum Kühlen und Erwärmen der Traktionsbatterie und des Fahrzeuginnenraums, mit Kühlmittelkreislauf und Kühlmittelkreislauf, wobei das Kühlfluid von dem zu komprimierenden Kältemittel separiert ist.

Weiterhin ist es bei elektrisch angetriebenen Klimakompressoren im Kraftfahrzeugbereich bekannt, den eigenen Kältemittelstrom (des zu komprimierenden Kältemittels) zu nutzen, um einen Klimakompressor bzw. dessen elektrischen Antriebsmotor zu kühlen. Außerdem kann Luft, die auf ein Gehäuse eines Klimakompressors strömt, zu dessen Kühlung verwendet werden. Durch eine derartige Kompressor-Kühlung kann der Kompressor effizienter betrieben werden. Die Effizienz wird jedoch weiterhin als verbesserungswürdig angesehen.

Es ist Aufgabe der Erfindung, ein Kompressor-System für ein Kraftfahrzeug vorzuschlagen, das einen vergleichsweise effizienten Betrieb, insbesondere eine vergleichsweise effiziente Kühlung einer Batterie und/oder sonstiger Komponenten eines Kraftfahrzeuges, ermöglicht. Weiterhin ist es Aufgabe der Erfindung, eine entsprechende Verwendung, ein entsprechendes Kraftfahrzeug, ein entsprechendes Verfahren zur Herstellung eines Kraftfahrzeuges sowie ein entsprechendes Verfahren zum Betreiben eines Kompressor-Systems oder Kraftfahrzeuges, vorzuschlagen.

Weiterhin ist es Aufgabe der Erfindung, ein Batterie-System für ein Kraftfahrzeug insbesondere mit elektrischem, vorzugsweise rein elektrischem Antrieb, vorzuschlagen, das einfach und mit möglichst geringer Beeinträchtigung der Umgebung, genutzt werden kann, insbesondere während eines Auflade-, vor allem Schnellladevorgangs. Weiterhin ist es Aufgabe der Erfindung, eine entsprechende Verwendung, ein entsprechendes Kraftfahrzeug, ein entsprechendes Verfahren zur Herstellung eines Kraftfahrzeuges sowie ein entsprechendes Verfahren zum Betreiben eines Batterie-Systems oder Kraftfahrzeuges, vorzuschlagen.

Insbesondere wird die Aufgabe gelöst durch ein (elektrisches) Kompressor-System für eir Kraftfahrzeug, insbesondere mit elektrischem, vorzugsweise rein elektrischem, Antrieb, umfassend mindestens einen (elektrisch angetriebenen) Kompressor (insbesondere Klimakompressor) zum Komprimieren eines Kältemittels sowie mindestens eine Kompressor-Kühleinrichtung zur Kühlung des Kompressors. Vorzugsweise ist in der Kompressor-Kühleinrichtung ein Kühlfluid, insbesondere eine Kühlflüssigkeit (vorzugsweise umfassend Wasser, ggf. zu mindestens 50 Gew.-%) strömbar bzw. strömt darin, wobei das Kühlfluid bzw. die Kühlflüssigkeit von dem durch den Kompressor zu komprimierenden Kältemittel separiert ist.

Ein Gedanke der Erfindung liegt darin, einen (Klima-) Kompressor unabhängig von einer eventuellen Kühlwirkung durch das zu komprimierende Kältemittel (ggf. zusätzlich) kühlen zu können. Durch eine derartige separate (bzw. externe) Kühlung kann beispielsweise eine Vorwärmung eines angesaugten (zu komprimierenden) Kältemittels beim Durchströmen bzw. bei einer damit einhergehenden (Teil-)Kühlung eines Elektromotors reduziert werden. Weiterhin kann eine Heißgastemperatur am Austritt des Kompressors abgesenkt werden. Alternativ oder zusätzlich kann eine Elektronik gekühlt werden.

Das (separate) Kühlfluid, insbesondere die (separate) Kühlflüssigkeit umfasst vorzugsweise Wasser, beispielsweise zu mindestens 20 Gew.-%, vorzugsweise mindestens 50 Gew.-%, noch weiter vorzugsweise mindestens 80 Gew.-%, noch weiter vorzugsweise mindestens 95 Gew.-%.

Das separate Kühlfluid unterscheidet sich in seiner Zusammensetzung von dem zu komprimierenden Kältem Das Kühlfluid, insbesondere die Kühlflüssigkeit, wird vorzugsweise durch einen ohnehin im Kraftfahrzeug vorhandenen Kühlfluidkreislauf (insbesondere Wasserkreislauf) bereitgestellt bzw. ist entsprechend bereitstellbar. Dieser Kühlfluidkreislauf (Wasserkreislauf) wird vorzugsweise auch noch zur Kühlung (und/oder Erwärmung) weiterer Komponenten des Kraftfahrzeugs verwendet.

Bei dem Kompressor kann es sich um einen Scroll-Verdichter oder sonstigen (elektrisch angetriebenen) Verdichter handeln.

Ausführungsgemäß umfasst der elektrisch angetriebene Kompressor mindestens einen Elektromotor, mindestens einen Verdränger (insbesondere Scroll-Verdränger) und/oder mindestens eine Steuereinrichtung (Elektronik bzw. SteuerElektronik).

Das Kühlfluid, insbesondere die Kühlflüssigkeit, kann in mindestens einer (dafür vorgesehenen) Kühlfluidführung, insbesondere Kühlfluidkanal, strömen. Die Kühlfluidführung (Kühlfluidkanal) kann beispielsweise in und/oder an, insbesondere innerhalb, einer Wandung eines Gehäuses (in dem der Kompressor aufgenommen ist) verlaufen. Die Kühlfluidführung (insbesondere Kühlfluidkanal) kann beispielsweise mindestens zwei oder mindestens drei oder mindestens vier Abschnitte (Bereiche) aufweisen, die vorzugsweise wahlweise mit Kühlfluid durchströmbar sind, so dass beispielsweise ein erster Bereich durchströmbar ist bzw. durchströmt wird, während ein zweiter Bereich - beispielsweise durch entsprechende Schaltung von Ventilen und/oder Pumpen - nicht von Kühlfluid durchströmbar ist bzw. wird. Die Kühlfluidführung kann mehrere (strömungstechnisch) parallel verlaufende Kühlfluidführungsabschnitte aufweisen.

Gemäß einem weiteren, generell unabhängigen (vorzugsweise weiterbildenden), Aspekt der Erfindung wird ein Kompressor-System (insbesondere der obigen Art) vorgeschlagen, für ein Kraftfahrzeug, vorzugsweise mit elektrischem, weiter vorzugsweise rein elektrischem, Antrieb, umfassend mindestens einen (elektrisch angetriebenen) Kompressor zum Komprimieren eines Kältemittels, wobei ein Elektromotor des Kompressors zumindest durch einen (durch den Elektromotor strömenden) Anteil des zu komprimierenden Kältemittels kühlbar ist, wobei ein, insbesondere steuer-, vorzugsweise regelbarer, Bypass vorgesehen ist, um zumindest einen (ggf. weiteren) Anteil des Kältemittels an dem Elektromotor vorbeileiten zu können. Vorzugsweise kann (insbesondere wahlweise) sowohl das gesamte (zu komprimierende) Kältemittel durch den Elektromotor strömen als auch an dem Elektromotor vorbeigeleitet werden (insbesondere durch entsprechende Ventilschaltung).

Vorzugsweise kann ein Sauggas am Elektromotor des Kompressors vorbeigeführt werden und (ohne Aufheizung) direkt zu einem Verdränger (Scroll-Verdränger) geführt werden. Alternativ kann ein Teil des Sauggases oder der komplette Sauggasstrom durch den E-Motor geführt werden. Insgesamt kann dadurch eine variable und effiziente bzw. wohl-dosierte Kühlung erzielt werden. Auch dadurch kann die Effizienz des Kompressor-Systems gesteigert werden.

Besonders bevorzugt ist der Bypass steuer-, weiter vorzugsweise regelbar, so dass der Anteil des zu komprimierenden Kältemittels (bzw. Sauggases), der über den Elektromotor (bzw. durch den Elektromotor) geführt wird, entsprechend eingestellt werden kann. Unter einer Steuerung bzw. Regelung ist insbesondere zu verstehen, dass mindestens zwei verschiedene Werte für diesen Anteil, weiter vorzugsweise mindestens fünf verschiedene Werte für diesen Anteil (ungleich null) eingestellt bzw. eingeregelt werden können. Im Allgemeinen soll unter einer Steuerung bzw. Regelung ein Vorgang verstanden werden, bei dem mindestens zwei, vorzugsweise mindestens fünf verschiedene Werte (größer null) entsprechend eingestellt bzw. eingeregelt werden können.

Insbesondere durch Kombination des Bypasses mit der (separaten) Kompressor-Kühleinrichtung kann ein vergleichsweise effizienter Betrieb des Kompressor-Systems, insbesondere eine vergleichsweise effiziente Elektromotor-Kühlung erzielt werden.

Vorzugsweise können durch das Kühlfluid mindestens zwei Komponenten des Kompressors gekühlt werden. Dazu sind vorzugsweise mehrere (beispielsweise mindestens zwei oder mindestens drei) vorzugsweise voneinander unabhängige Kühl-Subsysteme vorgesehen. Die Kühl-Subsysteme sind insbesondere derart voneinander unabhängig, dass eine Kühlfunktion für jedes einzelne Kühl-Subsystem unabhängig von den anderen Kühl-Subsystemen zu- oder abgeschaltet und/oder gesteuert, insbesondere geregelt, werden kann. Vorzugsweise handelt es sich bei den Komponenten des Kompressors um einen Verdränger (z. B. Scroll-Verdränger) und/oder einen Elektromotor und/oder eine Elektronik und/oder mindestens eine weitere Komponente.

Eine Steuerung (insbesondere Regelung) der Kühl-Subsysteme erfolgt vorzugsweise über eine oder mehrere (dem jeweiligen Subsystem zugeordnete, vorzugsweise unabhängige) Pumpe(n) und/oder über ein oder mehrere (entsprechende/s) Ventil(e).

Die Kompressor-Kühleinrichtung kann mindestens einen Kälteerzeuger umfassen. Der Kälteerzeuger wiederum umfasst ggf. mindestens einen Kompressor. Alternativ oder zusätzlich kann die Kompressor-Kühleinrichtung mindestens einen Fluidstromerzeuger, vorzugsweise umfassend (mindestens) ein Gebläse und/oder mindestens eine Pumpe, aufweisen. Die Kompressor-Kühleinrichtung kann mehrere Verdampfer beinhalten, von denen beispielsweise mindestens einer einen Luftwärmeaustausch und mindestens ein weiterer einen Wasserwärmeaustausch bewirkt.

Die Kompressor-Kühleinrichtung kann mindestens einen Fluidführungskanal (Wasserführungskanal) oder einen Abschnitt eines solchen umfassen. Vorzugsweise kann die Kompressor-Kühleinrichtung mindestens einen Fluidkreislauf (Wasserkreislauf) oder einen Abschnitt eines solchen umfassen Gemäß einem weiteren unabhängigen, vorzugsweise jedoch weiterbildenden, Aspekt, der Erfindung wird die Aufgabe insbesondere gelöst durch ein Batterie-System für ein Kraftfahrzeug, insbesondere mit elektrischem, vorzugsweise rein elektrischem, Antrieb, umfassend mindestens eine (aufladbare) Batterie (Akkumulator) sowie zumindest ein Kompressor-System gemäss der vorliegenden Erfindung, einer Kühleinrichtung zur (insbesondere aktiven) Kühlung der mindestens einer Batterie. Die zumindest eine aktive Komponente, insbesondere der zumindest eine Kompressor, der Kühleinrichtung bildet vorzugsweise mit der mindestens einen Batterie eine Baueinheit. Im Folgenden wird die Kühleinrichtung zur (insbesondere aktiven) Kühlung der mindestens einen Batterie mitunter auch nur kurz "Kühleinrichtung" (insbesondere in Abgrenzung zur obigen "Kompressor-Kühleinrichtung") genannt. Diese Kühleinrichtung kann auch als "Batterie-Kühleinrichtung" bezeichnet werden. Batterie- und Kompressor-Kühleinrichtung sind vorzugsweise voneinander unabhängig ausgebildet (als jeweils eigenständige Kühleinrichtungen), können aber auch zumindest teilweise durch gemeinsame Strukturen bzw. Komponenten ausgebildet werden.

Die (aktive) Komponente, insbesondere der Kompressor, kann zumindest abschnittsweise aus Metall, beispielsweise umfassend Eisen und/oder Aluminium und/oder eine Legierung davon, ausgebildet sein. Beispielsweise kann der Kompressor zu mindestens 10 Gew.-%, vorzugsweise mindestens 30 Gew.-% aus Metall bestehen. Bei mindestens einer Batterie kann es sich um eine Lithium-Ionen-Batterie und/oder einen Bleiakkumulator und/oder einen Akkumulator auf Nickel-Basis handeln. Die Energiedichte von mindestens einer Batterie kann mindestens 50 Wh/kg, insbesondere mindestens 100 Wh/kg betragen. Eine Querschnittsfläche des Kompressor-Eingangs und/oder Kompressor-Ausgangs ist vorzugsweise kleiner oder gleich 25 cm², weiter vorzugsweise kleiner oder gleich 10 cm² und/oder größer oder gleich 0,5 cm².

Unter einer Baueinheit ist insbesondere zu verstehen, dass die zumindest eine aktive Komponente, insbesondere der zumindest eine Kompressor, und die Batterie gemeinsam (ohne voneinander getrennt werden zu müssen) montiert und/oder demontiert werden können. Während der Montage bzw. Demontage sind dabei die mindestens eine Batterie und die zumindest eine aktive Komponente, insbesondere der zumindest eine Kompressor, vorzugsweise weiterhin miteinander verbunden. Konkret können Batterie und die zumindest eine aktive Komponente, insbesondere der zumindest eine Kompressor, durch einen gemeinsamen Rahmen und/oder innerhalb eines gemeinsamen Gehäuses gelagert sein.

Eine Distanz zwischen der zumindest einen aktiven Komponente, insbesondere dem zumindest einen Kompressor, und der mindestens einen Batterie (bzw. bei mehreren Batterien: mindestens einer der Batterien) ist vorzugsweise geringer als 50 cm, weiter vorzugsweise geringer als 20 cm oder geringer als 10 cm. Unter einer aktiven Komponente ist insbesondere eine Komponente zu verstehen (wie insbesondere ein Kompressor, ggf. eine Gebläse oder eine Pumpe), die mit (elektrischer und/oder mechanischer) Energie versorgt wird, um die Kühlung zu bewirken (zumindest mit-zu-bewirken). Vorzugsweise findet in der aktiven Komponente im Betrieb eine Energieumwandlung statt, insbesondere von elektrischer (und/oder mechanischer) Energie in Druck- und/oder kinetische Energie eines Fluids, insbesondere Kühlfluides. Generell ist unter einer Kühleinrichtung zur aktiven Kühlung der mindestens einen Batterie vorzugsweise eine Kühleinrichtung zu verstehen, die eine derartige aktive Komponente aufweist. Insbesondere ist also unter einer aktiven Komponente keine rein passive Komponente (wie beispielsweise ein Fluidkanal und/oder eine Kühlfinne) zu verstehen. Mit anderen Worten handelt es sich bei der zumindest einen aktiven Komponente der Kühleinrichtung zur aktiven Kühlung insbesondere nicht um einen (reinen) Wärmeübertrager (durch den ggf. ein Fluid strömen kann).

Ggf. kann die gesamte Kühleinrichtung eine Baueinheit mit der mindestens einen Batterie ausbilden oder zumindest mit einer oder mehreren (weitere/n) Komponente(n) der Kühleinrichtung wie insbesondere mit einem Verdampfer und/oder mit einem Kühlkreislauf (zumindest teilweise), insbesondere mit mindestens einem Rohr und/oder mindestens eine Wärmetauscher (bzw. - übertrager).

Die zumindest eine aktive Komponente, insbesondere der zumindest eine Kompressor, und die mindestens eine Batterie sind vorzugsweise unbeweglich miteinander verbunden. Eine Verbindung kann grundsätzlich lösbar oder unlösbar sein. Die zumindest eine aktive Komponente, insbesondere der zumindest eine Kompressor, und die mindestens eine Batterie sind also beispielsweise nicht (nur) über Fluidleitungen bzw. Kühlleitungen (wie beispielsweise Kühlschläuche oder dergleichen) miteinander verbunden. Die zumindest eine aktive Komponente, insbesondere der zumindest eine Kompressor, kann (innerhalb des Kraftfahrzeuges) auf einer Höhe angeordnet sein, die (zumindest ungefähr) einer Höhe der mindestens einen Batterie entspricht. Ein oberes Ende der zumindest einen aktive Komponente, insbesondere des zumindest eine Kompressors, kann ggf. unterhalb eines oberen Endes der mindestens einen Batterie (bei mehreren Batterien: des oberen Endes der obersten Batterie) angeordnet sein.

Die aktive Komponente (der Kompressor) und die mindestens eine Batterie sind vorzugsweise unbeweglich bzw. starr (unmittelbar oder mittelbar bzw. über eine starre Verbindungseinrichtung, wie beispielsweise einen Tragrahmen oder Abschnitt eines solchen) miteinander verbunden. Darunter soll insbesondere nicht zu verstehen sein, dass aktive Komponente (Kompressor) und Batterie nur über ein Gehäuse, insbesondere eine Gehäusewand und/oder ggf. bewegliche bzw. flexible (nicht-starre bzw. forminstabile) verbindende Strukturen, wie beispielsweise Verbindungsleitungen, insbesondere Fluidverbindungsleitungen, miteinander verbunden sind.

Insgesamt kann eine Vielzahl von mindestens 2 oder mindestens 5 oder mindestens 10 oder mindestens 20 Batterien vorliegen, die vorzugsweise in einem oder mehreren Batterie-Paket(en) zusammengefasst sind. Die zumindest eine aktive Komponente, insbesondere der zumindest eine Kompressor, ist vorzugsweise nicht in einem Motorraum des Kraftfahrzeuges angeordnet (bzw. nicht in einem entsprechenden vorderen und/oder hinteren Fahrzeugbereich). Dies kann aber der Fall sein. Im Allgemeinen ist die zumindest eine aktive Komponente, insbesondere der zumindest eine Kompressor, vorzugsweise nicht in einem neben einer Fahrgastzelle platzierten und von der Kraftfahrzeug-Karosserie eingeschlossenen Raum installiert (was aber alternativ auch der Fall sein kann).

Die Kühleinrichtung bzw. die zumindest eine aktive Komponente, insbesondere der zumindest eine Kompressor, ist vorzugsweise ausschließlich zur aktiven Kühlung der mindestens einen Batterie vorgesehen. Alternativ kann/können über die Kühleinrichtung bzw. die zumindest eine aktive Komponente, insbesondere den zumindest einen Kompressor, noch ein weiterer oder mehrere weitere Fahrzeugbereiche, wie beispielsweise eine Fahrgastzelle bzw. ein Fahrzeuginnenraum, gekühlt werden.

Erfindungsgemäß wurde insbesondere auch erkannt, dass beim Betrieb der Batterie, insbesondere im Ladebetrieb, zum Teil erhebliche Vibrationen und Geräuschemissionen, z. B. in der Fahrzeugkabine oder der Fahrzeugumgebung, auftreten können, die von einem fahrzeuginternen Kältekreis (mit einem fahrzeuginternen Kompressor) erzeugt werden. Eine Dämmung oder Dämpfung bzw. Abschirmung dieser Vibrationen bzw. Geräuscheinwirkungen (vibroakustischen Anregungen) und ein Abstellen derselben ist bei Konfigurationen nach dem Stand der Technik in mehrerer Hinsicht problematisch, da der (Klima-) Kompressor üblicherweise im vorderen Karosseriebereich verbaut wird, wo Steifigkeit und Masse (Gewicht) der Widerlager insbesondere bei Fahrzeugen ohne schwergewichtigen Verbrennungsmotor gering ausfallen. Dadurch wird eine Körperschall-Entkopplung erschwert. Durch die Erfindung kann nun (auch bei höheren elektrischen Leistungen, wie beispielsweise beim Schnellladen der mindestens einen Batterie, insbesondere von Triebstrang-Akkumulatoren von E-Fahrzeugen, insbesondere in der Leistungsklasse über 150 kW bis 350 kW oder darüber) fahrzeugintern entstehende Abwärme durch eine fahrzeuginterne Kühlanlage abgeführt werden, ohne dass erhebliche Geräuscheinwirkungen und/oder Vibrationseinträge, insbesondere in die Fahrzeugkabine, auftreten und/oder eine Geräuschabstrahlung, insbesondere in die Fahrzeugumgebung, stattfindet. Weiterhin ist auch eine Fremdkühlung von Fahrzeugkomponenten während des Schnellladens durch eine Ladestation nicht notwendig (bzw. nicht im gleichen Maße notwendig). Durch die erfindungsgemäße Baueinheit kann insgesamt eine (deutliche) Verbesserung hinsichtlich ungewollter Vibration bzw. Geräuschentwicklungen erzielt werden.

Die Kühleinrichtung umfasst vorzugsweise mindestens einen Kälteerzeuger. Der Kälteerzeuger wiederum umfasst vorzugsweise mindestens einen (Klima-) Kompressor. Alternativ oder zusätzlich kann die Kühleinrichtung mindestens einen Fluidstromerzeuger, vorzugsweise umfassend (mindestens) ein Gebläse und/oder mindestens eine Pumpe, aufweisen. Ebenso kann die Klühleinrichtung mehrere Verdampfer beinhalten, von denen beispielsweise mindestens einer einen Luftwärmeaustausch und mindestens ein weiterer einen Wasserwärmeaustausch bewirkt. Vibrations- bzw. Geräuschemissionen derartiger Kälteerzeuger und/oder Fluidstromerzeuger können durch geeignete Ausbildung der Baueinheit besonders effektiv unterdrückt oder reduziert werden.

In bevorzugten Ausführungsformen ist mindestens eine Trageinrichtung, insbesondere ein Tragrahmen (bzw. Traggestell), vorgesehen, durch die (den) die mindestens eine Batterie, insbesondere ein Akkumulator-Paket, gehalten wird. Die zumindest eine aktive Komponente, insbesondere der zumindest eine Kompressor, ist vorzugsweise (insbesondere überwiegend oder ausschließlich) auf der mindestens einen Trageinrichtung angeordnet. Unter einer überwiegenden Anordnung der zumindest einen aktiven Komponente, insbesondere des zumindest einen Kompressors, auf der Trageinrichtung ist insbesondere zu verstehen, dass mindestens 50 Gew.-%, vorzugsweise mindestens 80 Gew.-% der zumindest einen aktiven Komponente, insbesondere des zumindest einen Kompressors, auf der mindestens einen Trageinrichtung angeordnet ist, insbesondere gehalten ist. Besonders bevorzugt befindet sich ein (Klima-) Kompressor der Kühleinrichtung auf/an dem Tragrahmen, der auch zum Tragen der mindestens einen Batterie (insbesondere eines Akkumulatoren-Pakets) vorgesehen ist. Damit ist er aus anderen (traditionellen) Fahrzeugkomponenten ausgelagert. Eine Trageinrichtung, insbesondere ein Tragrahmen bietet gute Voraussetzungen für eine verbesserte vibroakustische Entkopplung, da eine derartige Trageinrichtung ohnehin (um ihre Funktion zu erfüllen) vergleichsweise steif ausgelegt sein muss und zusammen mit der mindestens einen Batterie (insbesondere mit den Akkumulator-Paketen) ein vergleichsweise hohes Gewicht (Masse) aufweist und über wenige (ggf. nur zwei, insbesondere vorne und hinten) definierte Anbindungspunkte zum Fahrzeug verfügt.

Im Allgemeinen können ggf. maximal 10, vorzugsweise maximal 4, weiter vorzugsweise maximal 2 Anbindungspunkte (bzw. Anbindungsstellen) der erfindungsgemäßen Baueinheit gegenüber dem Fahrzeug vorliegen. Weiterhin können sich ggf. sämtliche Anbindungspunkte (bzw. Anbindungsstellen) der erfindungsgemäßen Baueinheit gegenüber dem Fahrzeug über eine Berührungsfläche (zu den übrigen Komponenten des Fahrzeugs) von maximal 1000 cm², vorzugsweise maximal 100 cm², erstrecken.

Vorzugsweise werden mehrere Batterien (Akkumulatoren) um die zumindest eine aktive Komponente, insbesondere den zumindest einen Kompressor, herum angeordnet. Unter einer derartigen Anordnung ist insbesondere zu verstehen, dass zumindest zwei Batterien (vollständig) auf verschiedenen Seiten einer Ebene angeordnet sind, die die aktive Komponente schneidet (und vorzugsweise im eingebauten Zustand des Batterie-Systems vertikal verläuft). Projektionen dieser beiden Batterien auf die genannte Ebene überlappen sich vorzugsweise mit einer Projektion der aktiven Komponente auf dieselbe genannte Ebene. Auf mindestens zwei Seiten (im eingebauten Zustand) der aktiven Komponente (beispielsweise vor und hinter und/oder links und rechts) kann jeweils mindestens eine Batterie angeordnet sein. Die beiden genannten Seiten sind insbesondere eine erste Seite und eine der ersten Seite gegenüberliegende Seite der Kühleinrichtung (bzw. aktiven Komponente derselben).

Wenn einzelne Batterien (bzw. Akkumulator-Pakete) um die zumindest eine aktive Komponente, insbesondere den zumindest einen Kompressor, gruppiert werden, kann eine schalldämmende Wirkung durch ohnehin vorhandene Komponenten (Baugruppen) unterstützt werden.

Die zumindest eine aktive Komponente, insbesondere der zumindest eine Kompressor, kann in einem entsprechenden Gehäuse angeordnet sein. Alternativ oder zusätzlich ist die mindestens eine Batterie (oder sind bei mehreren Batterien ggf. sämtliche Batterien) in einem Gehäuse angeordnet. Bei dem jeweiligen Gehäuse kann es sich um ein gemeinsames Gehäuse handeln, das der zumindest einen aktiven Komponente, insbesondere dem zumindest einen Kompressor, und der mindestens einen Batterie gemein ist. Alternativ können die zumindest eine aktive Komponente, insbesondere der zumindest eine Kompressor, bzw. die mindestens eine Batterie jeweils einem (eigenen) Gehäuse zugeordnet sein, das (ggf. nur) die zumindest eine aktive Komponente, insbesondere den zumindest einen Kompressor (bzw. keine Batterie) bzw. (nur) die mindestens eine Batterie enthält (bzw. keine aktive Komponente). Weiterhin können auch die zumindest eine aktive Komponente, insbesondere der zumindest eine Kompressor, und mindestens eine Batterie in jeweils eigenen Gehäusen angeordnet sein, die wiederum in einem (übergeordneten) gemeinsamen Gehäuse angeordnet sind. In jedem Fall kann auf einfache Art und Weise eine kompakte Baueinheit realisiert werden.

Das (jeweilige) Gehäuse ist vorzugsweise zumindest abschnittsweise akustisch dämmend und/oder dämpfend ausgebildet. Weiter vorzugsweise umfasst das (jeweilige) Gehäuse eine, vorzugsweise poröse und/oder geschäumte, KunststoffKomponente, beispielsweise als Wandabschnitt, insbesondere Innen- und/oder Außenwandabschnitt.

Vorzugsweise ist der ggf. in einem akustisch dämmenden Gehäuse platzierte Kompressor durch mindestens eine Leitungsführung mit einem Kühlkreislauf verbunden, insbesondere derart, dass zumindest äußere Teile des Kompressors (zusätzlich zu seiner Innenkühlung) separat gekühlt werden.

Die zumindest eine aktive Komponente, insbesondere der zumindest eine Kompressor, kann zumindest teilweise auf mindestens einer schalldämmenden und/oder schalldämpfenden, insbesondere körperschalldämmenden und/oder - dämpfenden, vorzugsweise passiven und/oder schaltbaren und/oder (vibroakustisch) aktiven, Lagereinrichtung, und/oder einer Pneumatiklagerung angeordnet sein. Konkret kann die aktive Komponente (der Kompressor) in einer luftschalldämmenden Einhausung und/oder auf körperschall-entkoppelnden Lagern sitzen. Die Lagereinrichtungen (Lager) können eine feste Kennlinie aufweisen oder als schaltbare Lager oder als (Luft-) Lager mit regelbarem Druck ausgeführt sein. Die Lagereinrichtungen (Lager) können zumindest abschnittsweise einen, vorzugsweise porösen und/oder geschäumten Kunststoff aufweisen.

Eine, mehrere oder alle Leitung(en) der Steuer- und/oder Leistungselektrik und/oder alle, eine, mehrere oder alle fluidführende(n)n Leitung(en) (z. B. für Kältemittel durch einen Kompressor, wie auch für Wasser, Luft o.ä., insbesondere durch Kühlschlangen an oder innerhalb der mindestens einen aktiven Komponente oder zumindest innerhalb des schallgedämmten Gehäuses), die die mindestens eine in einem vorzugsweise schallgedämmten Gehäuse platzierte, aktive Komponente mit Komponenten außerhalb des (schallgedämmten) Gehäuses verbinden, kann/können vorzugsweise einzeln oder in Gruppen an steifen und/oder massereichen Punkten, bevorzugt an der obigen Trageinrichtung, vorzugsweise mittels (körper-)schalldämmender und/oder -dämpfender Ankoppelelemente befestigt sein.

Im Allgemeinen können also eine, mehrere oder alle Leitungen, die die in dem schallgedämmten Gehäuse platzierte aktive Komponente (den Kompressor) mit Komponenten außerhalb des schallgedämmten Gehäuses verbinden, vorzugsweise einzeln oder in Gruppen an steifen und/oder massereichen Punkten befestigt sein. Dies erfolgt bevorzugt an der Trageinrichtung mittels (körper-)schalldämmender und/oder -dämpfender Ankoppelelemente, so dass alle Übertragungspfade neben der (Körper-)Schallentkopplung der aktiven Komponente (des Kompressors) sowie seiner Luftschallabstrahlung ebenfalls gedämpft werden. Diese Anbindung betrifft vorzugsweise alle Leitungen der Steuer- und Leistungselektrik sowie fluidführende Leitungen.

Die fluidführenden Leitungen können zusätzlich mit passiven oder aktiven Pulsationsdämpfern (Mufflern) ausgestattet sein. Unter fluidführenden Leitungen sind insbesondere die Kältemittelleitungen sowie auch Fluidleitungen zur etwaigen Zusatzkühlung des Kompressors zu verstehen, die ggf. in Ergänzung zu seiner Innenkühlung durch das geförderte Kältemittel eine Zusatzkühlung durch ein anderes Fluid einbringen. Dies kann durch (Wasser- bzw. Fluid-) Kanäle in der aktiven Komponente (im Kompressor) erfolgen und/oder durch außen am Kompressor angebrachte Kühlkanäle (Kühlschlangen). Ebenso ist eine (Wasser-) Kühlung über eine im Inneren des schalldämmenden Gehäuses neben dem Kompressor platzierte Kühlfluidführung (Kühlschlange) möglich. Des Weiteren kann eine Luftkühlung mit Zuleitung und ggf. schallgedämpfter Abluft erfolgen. Für all diese Fluidleitungen gelten bevorzugt die o.g. Anbindungs- und Entkopplungsmethoden.

In Ausführungsformen ist mindestens eine Steuerelektrik für die mindestens eine Batterie, vorzugsweise als Bestandteil der Baueinheit, vorgesehen. Die mindestens eine aktive Komponente, insbesondere Kompressor, ist vorzugsweise zumindest teilweise zwischen der mindestens einen Batterie und der Steuerelektrik, insbesondere einem Gehäuse der Steuerelektrik, angeordnet. Auch dadurch kann auf einfache Art und Weise eine Vibrationsentstehung bzw. Schallemission verringert werden.

Insgesamt kann durch die Baueinheit, konkret durch eine Verblockung mit der ohnehin vorgesehenen Batterieeinheit (vorzugsweise aufweisend einen Tragrahmen) eine Kälteleistung, die während des Schnellladens und ggf. auch im Fahrbetrieb benötigt wird, auf einfache Weise und ohne (größere) Komplikationen erreicht werden. Eine derartige Konstruktionseinheit (inklusive der integrierten Kühlung) kann als (vollständiges) Modul konfiguriert sein. Eine Implementation in ein (neues) Fahrzeug kann durch eine derartige Modularität (deutlich) vereinfacht werden.

Die Kühleinrichtung kann ausschließlich zur Kühlung der Batterie konfiguriert sein oder auch weitere Komponenten und/oder Bereiche des Fahrzeugs kühlen, wie insbesondere eine Fahrzeugkabine. Dabei wurde erkannt, dass der Kühlbedarf für eine Fahrzeugkabine üblicherweise geringer ist als ein Kühlbedarf für eine (Schnell-) Ladung der Fahrzeugbatterie.

Die obengenannte Aufgabe wird weiterhin gelöst durch die Verwendung eines Kompressor-Systems und/oder eines Batterie-Systems der obigen Art für ein Kraftfahrzeug, insbesondere mit elektrischem, vorzugsweise mit rein elektrischem Antrieb.

Die obengenannte Aufgabe wird weiterhin insbesondere gelöst durch ein Kraftfahrzeug, insbesondere mit elektrischem, vorzugsweise mit rein elektrischem, Antrieb, umfassend ein Kompressor-System und/oder ein Batterie-System der obigen Art.

Die Aufgabe wird weiterhin insbesondere gelöst durch ein Verfahren zur (bzw. der) Herstellung eines Kraftfahrzeuges der obigen Art, wobei in einem ersten Schritt die Baueinheit, umfassend die zumindest eine aktive Komponente, insbesondere den zumindest einen Kompressor, und die mindestens eine Batterie bereit- oder hergestellt wird und in einem darauffolgenden Schritt die (gesamte) Baueinheit mit den übrigen Bestandteilen des Kraftfahrzeuges verbunden wird.

Die obengenannte Aufgabe wird weiterhin insbesondere gelöst durch ein Verfahren zum (bzw. des) Betreiben(s) eines Kompressor-Systems der obigen Art und/oder eines Batteriesystems der obigen Art und/oder eines Kraftfahrzeuges der obigen Art und/oder eines Kraftfahrzeuges hergestellt nach dem obigen Verfahren, wobei der mindestens eine Kompressor durch ein in der Kompressor-Kühleinrichtung strömendes Kühlfluid, insbesondere umfassend Wasser, gekühlt wird.

Die obengenannte Aufgabe wird weiterhin insbesondere gelöst durch ein (insbesondere das obige) Verfahren zum (bzw. des) Betreiben(s) des obigen Kompressor-Systems und/oder des obigen Batterie-Systems und/oder des obigen Kraftfahrzeuges nach Anspruches und/oder eines Kraftfahrzeuges hergestellt nach dem obigen Verfahren, wobei, insbesondere wahlweise, vorzugsweise durch eine entsprechende Steuerung bzw. Regelung, ein Elektromotor des Kompressors zumindest durch einen Anteil des zu komprimierenden Kältemittels gekühlt wird und/oder zumindest ein Anteil des Kältemittels an dem Elektromotor vorbei geleitet wird.

Die obengenannte Aufgabe wird weiterhin insbesondere gelöst durch ein Verfahren, insbesondere umfassend das obige Verfahren zum Betrieben eines Kompressor-Systems, zum (bzw. des) Betreiben(s) des obigen Batterie-Systems und/oder des obigen Kraftfahrzeuges und/oder eines Kraftfahrzeuges hergestellt nach dem obigen Verfahren, wobei die mindestens eine Batterie und/oder die Fahrzeugkabine während des Aufladens und/oder Entladens derselben, insbesondere während des Betriebes des Kraftfahrzeuges, durch die mindestens eine Kühleinrichtung gekühlt wird.

Die (aktive) Kühlung der Batterie (zumindest bzw. insbesondere beim Schnellladen) erfolgt vorzugsweise ausschließlich über die Kühleinrichtung.

Weitere Ausführungsformen ergeben sich aus den Unteransprüchen.

Nachfolgend wird die Erfindung auch hinsichtlich weiterer Merkmale und Vorteile anhand eines Ausführungsbeispiels beschrieben, das anhand der Abbildungen näher erläutert wird.

Hierbei zeigen:
- Fig. 1: eine schematische Darstellung eines konventionellen elektrisch angetriebenen Kraftfahrzeuges;
- Fig. 2: eine schematische Darstellung eines erfindungsgemäßen elektrisch angetriebenen Fahrzeugs; und
- Fig. 3: eine schematische Darstellung eines erfindungsgemäßen Kompressor-Systems.

In der nachfolgenden Beschreibung werden für gleiche und gleichwirkende Teile dieselben Bezugsziffern verwendet.

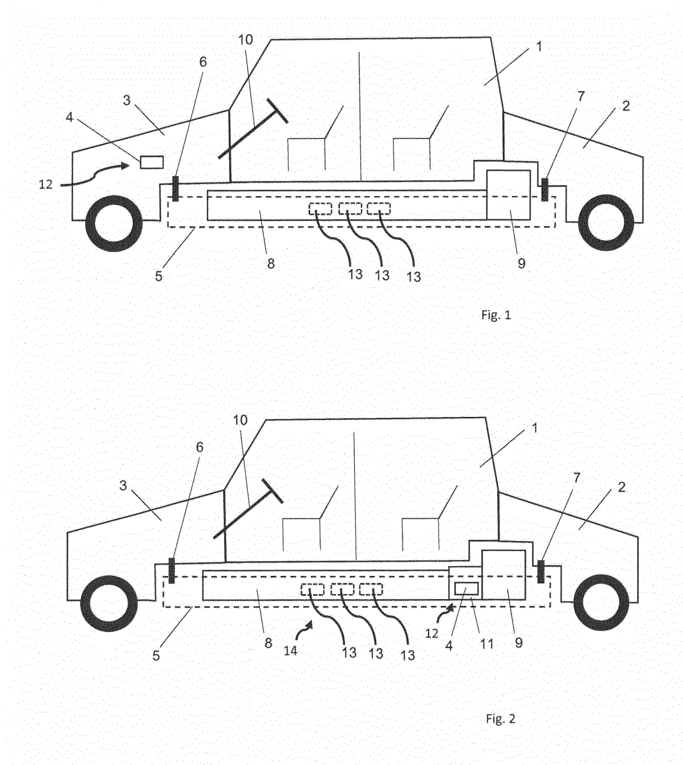

Fig. 1 zeigt eine schematische Darstellung eines konventionell angetriebenen Fahrzeuges mit einer konventionellen Batterie-Einheit.

Das Fahrzeug umfasst eine Fahrzeugkabine 1, einen Kofferraum 2 (optional), einen Motorraum (bzw. Aggregate-Raum) 3 und einen (Klima-) Kompressor 4 (vorzugsweise elektrisch angetrieben). Ein Batterie-Paket 8 ist auf einem (Haupt-) Tragrahmen 5 zum (tragenden) Aufnehmen des Batterie-Paketes 8 angeordnet.

Der Tragrahmen 5 ist über eine vordere Karosseriebefestigung 6 und eine hintere Karosseriebefestigung 7 befestigt.

Der (Klima-) Kompressor 4 ist Bestandteil einer Kühleinrichtung 12 unter anderem zur (aktiven) Kühlung des Batterie-Paketes 8. Das Batterie-Paket 8 umfasst eine Vielzahl von Batterien 13, wie in Fig. 1 (und auch Fig. 2) schematisch angedeutet.

Weiterhin befindet sich auf dem Tragrahmen 5 eine Steuerelektrik 9. Eine (optionale) Lenksäule wird durch das Bezugszeichen 10 symbolisiert.

Das erfindungsgemäß angetriebene elektrische Fahrzeug gemäß Fig. 2 kann grundsätzlich wie das Fahrzeug gemäß Fig. 1 aufgebaut sein, jedoch mit den folgenden (erfindungsgemäßen) Unterschieden hinsichtlich des Batterie-Systems. Bei der erfindungsgemäßen Ausführungsform gemäß Fig. 2 wird der (Klima-) Kompressor 4 durch den (Haupt-) Tragrahmen 5 des Batterie-Paketes 8 gehalten (gestützt). Konkret kann dieser (Klima-) Kompressor 4 durch einen (inneren) Tragrahmen 11 bzw. eine entsprechende Einhausung gehalten werden (bzw. darin aufgenommen werden), wobei dieser (innere) Tragrahmen 11 bzw. die Einhausung wiederum auf dem (Haupt-) Tragrahmen abgestützt ist.

Bei der ausführungsgemäßen Lösung sind demnach Batterie-Paket 8 und Kompressor 4 Bestandteil einer (gemeinsamen) Baueinheit 14.

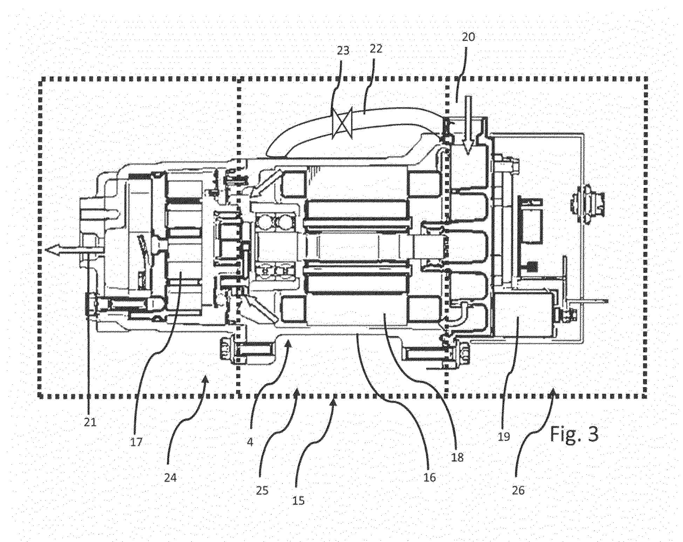

Fig. 3 zeigt ein erfindungsgemäßes Kompressor-System. Das Kompressor-System umfasst einen Kompressor 4 sowie eine Kompressor-Kühleinrichtung 15. Die Kompressor-Kühleinrichtung 15 ist hochschematisch dargestellt und kann konkret Kühlfluidkanäle (beispielsweise Kühlfluidschleifen) umfassen, die z. B. in einer entsprechenden Wandung eines Kompressorgehäuses 16 und/oder außenseitig und/oder innenseitig an einer Wandung des Kompressorgehäuses 16 angeordnet sind. Der Kompressor 4 umfasst einen Verdränger 17, einen Elektromotor 18 sowie eine (Steuer-) Elektronik 19. Der Verdränger ist hier beispielhaft als Scroll-Verdränger ausgebildet.

Sauggas wird über einen Kompressor-Eingang 20 eingeführt (eingesaugt), komprimiertes Gas (Heissgas) tritt über einen Kompressor-Ausgang 21 aus.

Das über den Kompressor-Eingang eintretende (Saug-) Gas kann entweder durch den Elektromotor 18 hindurchgeleitet werden (insbesondere zu dessen Kühlung) oder über einen Bypass 22 geleitet werden. Dazu kann entsprechend ein Bypass-Ventil 23 geschaltet bzw. angesteuert werden. Es ist auch möglich, einen Teil des eingesaugten Gases durch den Elektromotor 18 hindurch zu leiten und einen Teil des Gases (beispielsweise durch entsprechende Teil-Öffnung bzw. Teil-Schließung des Ventils 23) durch den Bypass 22. Besonders bevorzugt ist der jeweilige Anteil steuerbar, insbesondere regelbar. Aufgrund des (steuer- und/oder regelbaren) Bypasses für das Sauggas kann das Sauggas am Elektromotor 18 vorbeigeführt werden (und somit ohne Aufheizung direkt zum Verdränger 17 geführt werden). Alternativ kann zumindest ein Teil des Sauggases oder der komplette Sauggasstrom durch den Elektromotor 18 geführt werden. Dies ermöglicht eine Effizienzsteigerung durch Optimierung der Betriebsbedingungen bzw. Betriebstemperaturen in den relevanten Bereichen.

Weiterhin umfasst die Kompressor-Kühleinrichtung 15 ein erstes Subsystem 24, ein zweites Subsystem 25 und ein drittes Subsystem 26. Über das erste Subsystem 24 kann insbesondere der Verdränger 17 gekühlt werden, über das zweite Subsystem 25 insbesondere der Elektromotor 18 und über das dritte Subsystem 26 insbesondere die (Steuer-) Elektronik 19. Vorzugsweise kann jedes Subsystem unabhängig von den anderen beiden Subsystemen betrieben werden, also beispielsweise der Elektromotor 18 durch die Kompressor-Kühleinrichtung 15 gekühlt werden, ohne dass der Verdränger 17 (über das entsprechende Subsystem 24) oder die (Steuer-) Elektronik 19 (über das entsprechende Subsystem 26) gekühlt wird. Dadurch kann ein weiter optimierter Betrieb ermöglicht werden, was die Effizienz steigert. Die Steuerung bzw. Regelung der Subsysteme (zur Zusatzkühlung) kann über einzelne (unabhängige) Pumpen und/oder Ventile erfolgen.

An dieser Stelle sei darauf hingewiesen, dass alle oben beschriebenen Teile jeweils für sich - auch ohne im jeweiligen Zusammenhang zusätzlich beschriebene Merkmale, selbst wenn diese nicht explizit als optionale Merkmale im jeweiligen Zusammenhang individuell kenntlich gemacht worden sind, z. B. durch Verwendung von: insbesondere, vorzugsweise, beispielsweise, z. B., ggf. , runden Klammern, etc. - oder in Kombination oder jeglicher Unterkombination als eigenständige Ausgestaltungen bzw. Weiterbildungen der Erfindung, wie sie insbesondere in der Beschreibungseinleitung sowie den Ansprüchen definiert ist, anzusehen sind. Abweichungen hiervon sind möglich. Konkret sei darauf hingewiesen, dass das Wort insbesondere oder runde Klammern keine im jeweiligen Kontext zwingenden Merkmale kennzeichnen.

### Bezugszeichen

- 1: Fahrzeugkabine
- 2: Kofferraum
- 3: Motorraum (Aggregate-Raum)
- 4: (Klima-) Kompressor
- 5: (Haupt-) Tragrahmen
- 6: Vordere Karosseriebefestigung
- 7: Hintere Karosseriebefestigung
- 8: Batterie-Paket
- 9: Steuerelektrik
- 10: Lenksäule
- 11: (Innerer) Tragrahmen bzw. Einhausung
- 12: Kühleinrichtung
- 13: Batterie
- 14: Baueinheit
- 15: Kompressor-Kühleinrichtung
- 16: Kompressorgehäuse
- 17: Verdränger
- 18: Elektromotor
- 19: (Steuer-) Elektronik
- 20: Kompressor-Eingang
- 21: Kompressor-Ausgang
- 22: Bypass
- 23: Bypass-Ventil
- 24: erstes Subsystem
- 25: zweites Subsystem
- 26: drittes Subsystem

## Patentansprüche

1. Elektrisches Kompressor-System für ein Kraftfahrzeug, insbesondere mit elektrischem, vorzugsweise rein elektrischem, Antrieb, umfassend mindestens einen elektrisch angetriebenen Kompressor (4) zum Komprimieren eines Kältemittels sowie mindestens eine Kompressor-Kühleinrichtung (15) zur Kühlung des Kompressors (4), wobei in der Kompressor-Kühleinrichtung (15) ein Kühlfluid, insbesondere eine Kühlflüssigkeit, vorzugsweise umfassend Wasser, strömbar ist,
**dadurch gekennzeichnet, dass** das Kühlfluid von dem durch den Kompressor (4) zu komprimierenden Kältemittel separiert ist, wobei sich das Kühlfluid in seiner stofflichen Zusammensetzung von dem zu komprimierenden Kältemittel unterscheidet.

2. Kompressor-System nach Anspruch 1, wobei ein Elektromotor des Kompressors (4) zumindest durch einen Anteil des zu komprimierenden Kältemittels kühlbar ist, wobei ein, insbesondere steuer- bzw. regelbarer, Bypass (22) vorgesehen ist, um zumindest einen Anteil des Kältemittels an dem Elektromotor (18) vorbei leiten zu können.

3. Kompressor-System nach Anspruch 1 oder 2,
**dadurch gekennzeichnet, dass**
durch das Kühlfluid, insbesondere mittels mehrerer, vorzugsweise voneinander unabhängiger Kühl-Subsysteme (24, 25, 26), mindestens zwei Komponenten des Kompressors kühlbar sind, vorzugsweise ein Verdränger (17), z. B. Scroll, und/oder ein Elektromotor (18) und/oder eine Elektronik (19) und/oder mindestens eine weitere Komponente.

4. Kompressor-System nach einem der vorhergehenden Ansprüche,
**dadurch gekennzeichnet, dass** mindestens ein Ventil und/oder mindestens eine Pumpe, vorzugsweise mindestens zwei, insbesondere voneinander unabhängige, Pumpen, vorgesehen ist/sind, um eine Kühlung von mindestens zwei Kühl-Subsystemen (24, 25, 26) der Kompressor-Kühleinrichtung (15) zu steuern, insbesondere zu regeln.

5. Batterie-System für ein Kraftfahrzeug, insbesondere mit elektrischem, vorzugsweise rein elektrischem, Antrieb, umfassend mindestens eine aufladbare Batterie (13) sowie zumindest ein Kompressor-System nach einem der vorhergehenden Ansprüche zur aktiven Kühlung der mindestens einen Batterie (13).

6. Batterie-System nach Anspruch 5, für ein Kraftfahrzeug, insbesondere mit elektrischem, vorzugsweise rein elektrischem, Antrieb, umfassend mindestens eine aufladbare Batterie (13) sowie zumindest eine aktive Komponente, nämlich zumindest einen Kompressor (4), einer Kühleinrichtung (12) zur aktiven Kühlung der mindestens einen Batterie (13), wobei die aktive Komponente, zusammen mit der mindestens einen Batterie (13) eine Baueinheit (14) ausbildet, derart, dass die aktive Komponente und mindestens eine Batterie unbeweglich bzw. starr (unmittelbar oder mittelbar bzw. über eine starre Verbindungseinrichtung) miteinander verbunden sind.

7. Batterie-System nach Anspruch 5 oder 6,
**dadurch gekennzeichnet, dass** mindestens eine Trageinrichtung, insbesondere ein Tragrahmen (5), vorgesehen ist, durch die/den die mindestens eine Batterie (13), insbesondere mindestens ein Akkumulator-Paket (8), gehalten wird,
wobei die aktive Komponente, insbesondere der Kompressor (4), vorzugsweise, insbesondere überwiegend oder ausschließlich, auf der mindestens einen Trageinrichtung angeordnet ist.

8. Batterie-System nach einem der Ansprüche 5 bis 7,
**dadurch gekennzeichnet, dass** mehrere Batterien (13) um die mindestens eine aktive Komponente, insbesondere den mindestens einen Kompressor (4), herum angeordnet sind.

9. Batterie-System nach einem der vorhergehenden Ansprüche 5 bis 8,
**dadurch gekennzeichnet, dass** die mindestens eine aktive Komponente, insbesondere der mindestens eine Kompressor (4), und/oder die mindestens eine Batterie (13) in einem, insbesondere akustisch schalldämmende und/oder im Inneren schallabsorbierenden, Gehäuse angeordnet sind, wobei es sich bei dem jeweiligen Gehäuse ggf. um ein Gehäuse handelt, das der mindestens einen aktiven Komponente, insbesondere dem mindestens einen Kompressor, und der mindestens einen Batterie (13) gemein ist oder um ein, insbesondere akustisch schalldämmendes und/oder im Inneren schallabsorbierendes, Gehäuse handelt, das nur die mindestens eine aktive Komponente, insbesondere den mindestens einen Kompressor, bzw. nur die mindestens eine Batterie (13) enthält.

10. Batterie-System nach einem der vorhergehenden Ansprüche 5 bis 9,
**dadurch gekennzeichnet, dass** der ggf. in einem akustisch dämmenden Gehäuse platzierte Kompressor durch mindestens eine Leitungsführung mit einem Kühlkreislauf verbunden ist, derart dass zumindest äußere Teile des Kompressors zusätzlich zu seiner Innenkühlung separat gekühlt werden.

11. Batterie-System nach einem der vorhergehenden Ansprüche 5 bis 9,
**dadurch gekennzeichnet, dass** die mindestens eine aktive Komponente, insbesondere der mindestens eine Kompressor (4), zumindest teilweise auf mindestens einer schalldämmenden und/oder schalldämpfenden, insbesondere körperschalldämmenden und/oder -dämpfenden, vorzugsweise passiven und/oder schaltbaren und/oder vibroakustisch aktiven, Lagereinrichtung, bzw. einer Pneumatiklagerung angeordnet ist.

12. Batterie-System nach einem der vorhergehenden Ansprüche 5 bis 11,
**dadurch gekennzeichnet, dass**
eine, mehrere oder alle Leitung(en) der Steuer- und/oder Leistungselektrik und/oder eine, mehrere, oder alle fluidführende(n) Leitung(en), die die mindestens eine nach Anspruch 9 in einem vorzugsweise schallgedämmten Gehäuse platzierte, aktive Komponente mit Komponenten außerhalb des schallgedämmten Gehäuses verbinden, vorzugsweise einzeln oder in Gruppen an steifen und/oder massereichen Punkten, bevorzugt an der Trageinrichtung nach Anspruch 7, vorzugsweise mittels körperschalldämmender und/oder -dämpfender Ankoppelelementen, befestigt sind.

13. Batterie-System nach einem der vorhergehenden Ansprüche 5 bis 12,
**dadurch gekennzeichnet, dass**
mindestens eine Steuerelektrik (9) für die Batterie (13), vorzugsweise als Bestandteil der Baueinheit (14), vorgesehen ist, wobei die mindestens eine aktive Komponente, insbesondere der mindestens eine Kompressor (4), vorzugsweise zumindest teilweise zwischen der mindestens einen Batterie (13) und der Steuerelektrik (9), insbesondere einem Gehäuse der Steuerelektrik, angeordnet ist.

14. Verwendung eines Kompressor-Systems nach einem der vorhergehenden Ansprüche 1 bis 4 und/oder eines Batterie-Systems nach einem der vorhergehenden Ansprüche 5 bis 13 für ein Kraftfahrzeug, insbesondere mit elektrischem, vorzugsweise rein elektrischem Antrieb.

15. Kraftfahrzeug, insbesondere mit elektrischem, vorzugsweise rein elektrischem Antrieb, umfassend ein Kompressor-System nach einem der vorhergehenden Ansprüche 1 bis 4 und/oder ein Batterie-System nach einem der vorhergehenden Ansprüche 5 bis 13.

16. Verfahren zum Betreiben eines Kompressor-Systems nach einem der Ansprüche 1 bis 4 und/oder eines Batteriesystems nach einem der Ansprüche 5 bis 13 und/oder eines Kraftfahrzeuges nach Anspruches 15 wobei der mindestens eine Kompressor durch ein in der Kompressor-Kühleinrichtung (15) strömendes Kühlfluid, insbesondere umfassend Wasser, gekühlt wird.

17. Verfahren nach Anspruch 16, unter Rückbezug auf mindestens einen der Ansprüche 5 bis 13, wobei in einem ersten Schritt die Baueinheit (14), umfassend die mindestens eine aktive Komponente, insbesondere den mindestens einen Kompressor (4), und die mindestens eine Batterie (13) bereit- oder hergestellt wird und in einem darauffolgenden Schritt die Baueinheit (14) mit den übrigen Bestandteilen des Kraftfahrzeuges verbunden wird.

18. Verfahren nach Anspruch 16 oder 17, zum Betreiben eines Kompressor-Systems nach einem der Ansprüche 1 bis 4 und/oder eines Batterie-Systems nach einem der Ansprüche 5 bis 13 und/oder eines Kraftfahrzeuges nach Anspruches 15,
wobei, insbesondere wahlweise, vorzugsweise durch eine entsprechende Steuerung bzw. Regelung, ein Elektromotor (18) des Kompressors (4) zumindest durch einen Anteil des zu komprimierenden Kältemittels gekühlt wird und/oder zumindest ein Anteil des Kältemittels an dem Elektromotor (18) vorbei geleitet wird.

19. Verfahren nach einem der Ansprüche 16 bis 18, zum Betreiben eines Batterie-Systems nach einem der Ansprüche 5 bis 13 und/oder eines Kraftfahrzeuges nach Anspruch 15, wobei die mindestens eine Batterie (13) und/oder die Fahrzeugkabine während des Aufladens und/oder Entladens derselben, insbesondere während des Betriebes des Kraftfahrzeuges, durch die mindestens eine Kühleinrichtung (12) gekühlt wird.

## Claims

1. Electric compressor system for a motor vehicle, in particular with an electric, preferably purely electric, drive, comprising at least one electrically driven compressor (4) for compressing a refrigerant and at least one compressor cooling device (15) for cooling the compressor (4), wherein a cooling fluid, in particular a cooling liquid, preferably comprising water, can flow in the compressor cooling device (15),
**characterized in that**
the cooling fluid is separated from the refrigerant to be compressed by the compressor (4), wherein the cooling fluid differs in its material composition from the refrigerant to be compressed.

2. Compressor system according to claim 1, wherein an electric motor of the compressor (4) can be cooled by at least a portion of the refrigerant to be compressed, wherein a bypass (22), which can be controlled or regulated in particular, is provided in order to be able to conduct at least a portion of the refrigerant past the electric motor (18).

3. Compressor system according to claim 1 or 2,
**characterized in that**
at least two components of the compressor, preferably a displacer (17), e.g. scroll, and/or an electric motor (18) and/or an electronic system (19) and/or at least one further component, can be cooled by the cooling fluid, in particular by means of a plurality of preferably mutually independent cooling subsystems (24, 25, 26).

4. Compressor system according to one of the preceding claims,
**characterized in that**
at least one valve and/or at least one pump, preferably at least two pumps, in particular independent of one another, is/are provided in order to control, in particular regulate, a cooling of at least two cooling subsystems (24, 25, 26) of the compressor cooling device (15).

5. Battery system for a motor vehicle, in particular with electric, preferably purely electric, drive, comprising at least one rechargeable battery (13) and at least one compressor system according to one of the preceding claims for actively cooling the at least one battery (13).

6. Battery system according to claim 5, for a motor vehicle, in particular with an electric, preferably purely electric, drive, comprising at least one rechargeable battery (13) and at least one active component, namely at least one compressor (4), of a cooling device (12) for active cooling of the at least one battery (13), wherein the active component, together with the at least one battery (13), form a structural unit (14) in such a way that the active component and at least one battery are immovably or rigidly connected to each other (directly or indirectly via a rigid connecting device).

7. Battery system according to claim 5 or 6,
**characterized in that**
at least one support device, in particular a support frame (5), is provided, by means of which the at least one battery (13), in particular at least one accumulator pack (8), is held, wherein the active component, in particular the compressor (4), is preferably, in particular predominantly or exclusively, arranged on the at least one support device.

8. Battery system according to one of claims 5 to 7,
**characterized in that**
several batteries (13) are arranged around the at least one active component, in particular the at least one compressor (4).

9. Battery system according to one of the preceding claims 5 to 8,
**characterized in that**
the at least one active component, in particular the at least one compressor (4), and/or the at least one battery (13) are arranged in a housing, in particular an acoustically sound-absorbing and/or internally sound-absorbing housing, wherein the respective housing is optionally a housing which is common to the at least one active component, in particular the at least one compressor, and the at least one battery (13), or a housing, in particular an acoustically sound-insulating and/or internally sound-absorbing housing, which contains only the at least one active component, in particular the at least one compressor, or only the at least one battery (13).

10. Battery system according to one of the preceding claims 5 to 9,
**characterized in that**
the compressor, which may optionally be placed in an acoustically insulating housing, is connected to a cooling circuit by at least one line routing in such a way that at least outer parts of the compressor are cooled separately in addition to its internal cooling.

11. Battery system according to one of the preceding claims 5 to 9,
**characterized in that**
the at least one active component, in particular the at least one compressor (4), is arranged at least partially on at least one sound-absorbing and/or sound-damping, in particular structure-borne sound-absorbing and/or sound-damping, preferably passive and/or switchable and/or vibroacoustically active, bearing device, or a pneumatic bearing.

12. Battery system according to one of the preceding claims 5 to 11,
**characterized in that**
one, several or all line(s) of the control and/or power electrical system and/or one, several or all fluid-carrying line(s), which connect the at least one active component which is placed according to claim 9 in a preferably sound-insulated housing to components outside of the sound-insulated housing, preferably individually or in groups to rigid and/or high-mass points, preferably to the support device according to claim 7, preferably by means of structure-borne sound-absorbing and/or sound-damping coupling elements.

13. Battery system according to one of the preceding claims 5 to 12,
**characterized in that**
at least one control electrical system (9) is provided for the battery (13), preferably as a component of the structural unit (14), wherein the at least one active component, in particular the at least one compressor (4), is preferably arranged at least partially between the at least one battery (13) and the control electrical system (9), in particular a housing of the control electrical system.

14. Use of a compressor system according to one of the preceding claims 1 to 4 and/or a battery system according to one of the preceding claims 5 to 13 for a motor vehicle, in particular with electric, preferably purely electric, drive.

15. Motor vehicle, in particular with electric, preferably purely electric, drive, comprising a compressor system according to one of the preceding claims 1 to 4 and/or a battery system according to one of the preceding claims 5 to 13.

16. Method for operating a compressor system according to one of claims 1 to 4 and/or a battery system according to one of claims 5 to 13 and/or a motor vehicle according to claim 15, wherein the at least one compressor is cooled by a cooling fluid, in particular comprising water, flowing in the compressor cooling device (15).

17. Method according to claim 16, with reference back to at least one of claims 5 to 13,
wherein in a first step the structural unit (14) comprising the at least one active component, in particular the at least one compressor (4), and the at least one battery (13) is prepared or manufactured and in a subsequent step the structural unit (14) is connected to the other components of the motor vehicle.

18. Method according to claim 16 or 17, for operating a compressor system according to one of claims 1 to 4 and/or a battery system according to one of claims 5 to 13 and/or a motor vehicle according to claim 15,
wherein, in particular optionally, preferably by means of a corresponding control or regulation, an electric motor (18) of the compressor (4) is cooled at least by a portion of the refrigerant to be compressed and/or at least a portion of the refrigerant is conducted past the electric motor (18).

19. Method according to one of claims 16 to 18, for operating a battery system according to one of claims 5 to 13 and/or a motor vehicle according to claim 15, wherein the at least one battery (13) and/or the vehicle cabin is cooled by the at least one cooling device (12) during charging and/or discharging thereof, in particular during operation of the motor vehicle.

## Revendications

1. Système de compresseur électrique pour un véhicule, notamment à entraînement électrique, de préférence purement électrique, comprenant au moins un compresseur (4) à entraînement électrique servant à comprimer un fluide frigorigène ainsi qu'au moins un dispositif de refroidissement à compresseur (15) servant à refroidir le compresseur (4), un fluide de refroidissement, notamment un liquide de refroidissement, comprenant de préférence de l'eau, pouvant s'écouler dans le dispositif de refroidissement de compresseur (15), **caractérisé en ce que** le fluide de refroidissement est séparé du fluide frigorigène à comprimer par le compresseur (4), le fluide de refroidissement se distinguant dans sa composition matérielle du fluide frigorigène à comprimer.

2. Système de compresseur selon la revendication 1, dans lequel un moteur électrique du compresseur (4) peut être refroidi au moins par une partie du fluide frigorigène à comprimer, une dérivation (22), notamment contrôlable ou réglable, étant prévue pour pouvoir faire passer au moins une partie du fluide frigorigène devant le moteur électrique (18).

3. Système de compresseur selon la revendication 1 ou 2,
**caractérisé en ce que**
le fluide de refroidissement, notamment au moyen de plusieurs sous-systèmes de refroidissement (24, 25, 26), de préférence indépendants l'un de l'autre, permet de refroidir au moins deux composants du compresseur, de préférence un élément de refoulement (17), par exemple un défilement, et/ou un moteur électrique (18) et/ou une électronique (19) et/ou au moins un autre composant.

4. Système de compresseur selon l'une des revendications précédentes,
**caractérisé en ce que**
au moins une soupape et/ou au moins une pompe, de préférence au moins deux pompes, notamment indépendantes l'une de l'autre, est/sont prévue(s) pour commander, notamment pour régler, un refroidissement d'au moins deux sous-systèmes de refroidissement (24, 25, 26) du dispositif de refroidissement à compresseur (15).

5. Système de batterie pour un véhicule, notamment à entraînement électrique, de préférence purement électrique, comprenant au moins une batterie rechargeable (13) ainsi qu'au moins un système de compresseur selon l'une des revendications précédentes, pour le refroidissement actif de l'au moins une batterie (13).

6. Système de batterie selon la revendication 5, pour un véhicule, notamment à entraînement électrique, de préférence purement électrique, comprenant au moins une batterie rechargeable (13) ainsi qu'au moins un composant actif, à savoir au moins un compresseur (4), un dispositif de refroidissement (12) pour le refroidissement actif de l'au moins une batterie (13), le composant actif formant, conjointement avec l'au moins une batterie (13), une unité modulaire (14) de telle sorte que le composant actif et au moins une batterie soient reliés entre eux de manière fixe ou rigide (directement ou indirectement ou par l'intermédiaire d'un dispositif de liaison rigide).

7. Système de batterie selon la revendication 5 ou 6,
**caractérisé en ce que**
il est prévu au moins un dispositif de soutien, notamment un cadre de support (5), qui maintient l'au moins une batterie (13), notamment au moins un paquet d'accumulateurs (8), le composant actif, notamment le compresseur (4), étant disposé de préférence, notamment principalement ou exclusivement, sur l'au moins un dispositif de support.

8. Système de batterie selon l'une des revendications 5 à 7,
**caractérisé en ce que**
plusieurs batteries (13) sont disposées autour de l'au moins un composant actif, notamment de l'au moins un compresseur (4).

9. Système de batterie selon l'une des revendications précédentes 5 à 8,
**caractérisé en ce que**
l'au moins un composant actif, notamment l'au moins un compresseur (4), et/ou l'au moins une batterie (13) sont disposés dans un boîtier, notamment insonorisant acoustiquement et/ou absorbant le son à l'intérieur, le boîtier respectif étant le cas échéant un boîtier commun à l'au moins un composant actif, notamment à l'au moins un compresseur, et à l'au moins une batterie (13) ou étant un boîtier, notamment insonorisant acoustiquement et/ou absorbant le son à l'intérieur, qui ne contient que l'au moins un composant actif, notamment l'au moins un compresseur, ou que l'au moins une batterie (13).

10. Système de batterie selon l'une des revendications précédentes 5 à 9,
**caractérisé en ce que**
le compresseur placé éventuellement dans un boîtier acoustiquement isolant est relié à un circuit de refroidissement par au moins un guide de conduite, de sorte qu'au moins des parties extérieures du compresseur sont refroidies séparément en plus de son refroidissement intérieur.

11. Système de batterie selon l'une des revendications précédentes 5 à 9,
**caractérisé en ce que**
l'au moins un composant actif, notamment l'au moins un compresseur (4), est disposé au moins partiellement sur au moins un dispositif de support ou un palier pneumatique, insonorisant et/ou amortissant le bruit, notamment un dispositif insonorisant et/ou amortissant les bruits de structure, de préférence passif et/ou commutable et/ou actif sur le plan vibroacoustique.

12. Système de batterie selon l'une des revendications précédentes 5 à 11,
**caractérisé en ce que**
une, plusieurs ou toutes les lignes du système électrique de commande et/ou de puissance et/ou une, plusieurs, ou toutes les lignes de transport de fluide qui relient l'au moins un composant actif placé dans un boîtier de préférence insonorisé selon la revendication 9 à des composants à l'extérieur du boîtier insonorisé, sont fixées, de préférence individuellement ou en groupes, à des points rigides et/ou massifs, de préférence au dispositif de soutien selon la revendication 7, de préférence au moyen d'éléments de couplage insonorisant et/ou amortissant les bruits de structure.

13. Système de batterie selon l'une des revendications précédentes 5 à 12,
**caractérisé en ce que**
au moins un système électrique de commande (9) est prévu pour la batterie (13), de préférence en tant que partie intégrante de l'unité modulaire (14), l'au moins un composant actif, notamment l'au moins un compresseur (4), étant de préférence disposé au moins partiellement entre l'au moins une batterie (13) et le système électrique de commande (9), notamment un boîtier du système électrique de commande.

14. Utilisation d'un système de compresseur selon l'une des revendications précédentes 1 à 4 et/ou d'un système de batterie selon l'une des revendications précédentes 5 à 13 pour un véhicule, notamment à entraînement électrique, de préférence purement électrique.

15. Véhicule, notamment à entraînement électrique, de préférence purement électrique, comprenant un système de compresseur selon l'une des revendications précédentes 1 à 4 et/ou un système de batterie selon l'une des revendications précédentes 5 à 13.

16. Procédé pour faire fonctionner un système de compresseur selon l'une des revendications 1 à 4 et/ou un système de batterie selon l'une des revendications 5 à 13 et/ou un véhicule selon la revendication 15, dans lequel l'au moins un compresseur est refroidi par un fluide de refroidissement s'écoulant dans le dispositif de refroidissement à compresseur (15), notamment comprenant de l'eau.

17. Procédé selon la revendication 16, en référence à au moins l'une des revendications 5 à 13, dans lequel, dans une première étape, on prépare ou on fabrique l'unité modulaire (14) comprenant l'au moins un composant actif, notamment l'au moins un compresseur (4), et l'au moins une batterie (13), et dans une étape ultérieure, on relie l'unité modulaire (14) aux composants restants du véhicule.

18. Procédé selon la revendication 16 ou 17, pour faire fonctionner un système de compresseur selon l'une des revendications 1 à 4 et/ou un système de batterie selon l'une des revendications 5 à 13 et/ou un véhicule selon la revendication 15, dans lequel un moteur électrique (18) du compresseur (4) est refroidi au moins par une partie du fluide frigorigène à comprimer et/ou au moins une partie du fluide frigorigène passe devant le moteur électrique (18), notamment au choix, de préférence par un contrôle ou une régulation correspondante.

19. Procédé selon l'une des revendications 16 à 18, pour faire fonctionner un système de batterie selon l'une des revendications 5 à 13 et/ou un véhicule selon la revendication 15, dans lequel l'au moins une batterie (13) et/ou la cabine du véhicule sont refroidies par l'au moins un dispositif de refroidissement (12) pendant la charge et/ou la décharge de celle-ci, notamment pendant le fonctionnement du véhicule.
